# EUROPEAN PATENT SPECIFICATION

(11) **EP 3 196 114 B1**
(45) Date of publication and mention of the grant of the patent: **11.09.2019**
(21) Application number: 15842399.6
(22) Date of filing: 13.07.2015
(51) Int. Cl.: B63B 35/00, B63B 39/06, F03D 9/00, F03B 13/14, B63H 25/42

(54) **FLOATING WIND POWER GENERATION DEVICE**
SCHWIMMENDE WINDENERGIEERZEUGUNGSVORRICHTUNG
DISPOSITIF GÉNÉRATEUR D'ÉNERGIE ÉOLIENNE FLOTTANT

(30) Priority: 17.09.2014 KR 20140123722
(43) Date of publication of application: 26.07.2017
(73) Proprietor: University Of Ulsan Foundation For Industry Cooperation, Ulsan 680-749 (KR)
(72) Inventor: SHIN, Hyun Kyoung, Ulsan 681-751 (KR); KIM, Dong Ju, Ulsan 680-812 (KR)
(74) Representative: Roos, Peter
(86) International application number: PCT/KR2015/007265
(87) International publication number: WO 2016/043415

(56) References cited:
- WO-A1-2013/095097
- JP-A- 2010 228 503
- KR-A- 20130 046 192
- KR-A- 20140 035 555
- KR-A- 20140 052 353
- KR-A- 20140 090 753
- KR-A- 20140 090 753
- KR-B1- 101 338 122

## Description

### TECHNICAL FIELD

The present invention relates to a floating wind power generation device that produces electricity using wind in a state in which the floating wind power generation device is disposed to float on the sea.

### BACKGROUND ART

In general, offshore structures can be moored in a floating state on a surface of the sea and are classified into various types according to functions, structures, and mooring methods. For example, these offshore structures include many types of offshore structures including Semi-Submersible (SEMI) offshore structures, Tensioned Leg Platform (TLP) offshore structures, spar type offshore structures, Floating Production, Storage and Off-loading (FPSO) offshore structures, Floating Storage Re-gasification Unit (FSRU) offshore structures, or drilling rigs.

Recently, the concern about alternative energy for replacing thermal power generation · nuclear power generation, and ocean current generation increases, and research and development into substantial devices for the use thereof are carried out, and in particular, the concern about an offshore power generation device that simultaneously uses wind power energy through an offshore structure that floats on the surface of the sea, and development thereof have highlighted.

However, in a floating offshore wind power generation device according to the related art, a roll motion in which a body of a ship of an offshore structure is shaken to the left/right, occurs so that power generation efficiency is lowered.

Such a floating offshore wind power generation device according to the related art is disclosed in Korean Patent Laid-open Publication No. 2013-0048853 (May 13, 2013).

Another type of offshore floating wind power generation device is known from KR 2014 0090753 A.

### DETAILED DESCRIPTION OF THE INVENTION

### TECHNICAL PROBLEM

The present invention provides a floating wind power generation device that enables power generation by wind while maintaining a stable floating state on the sea.

### TECHNICAL SOLUTION

According to an aspect of the present invention, there is provided a floating wind power generation device including: a main buoyant body which has buoyancy, so as to float on the sea, and has a space portion provided in the center; an auxiliary buoyant body which has buoyancy and is connected to the main buoyant body by being inserted into the space portion of the main buoyant body; a plurality of wind power generators which are vertically provided on top of the auxiliary buoyant body and generate power; a location control means which is connected to the main buoyant body and controls the location of the main buoyant body; an oscillation inhibiting means which is connected to the main buoyant body and enables the main buoyant body to maintain an equilibrium state by absorbing the sea waves; and a dock connection unit which is connected to the main buoyant body and enables a ship to lie at anchor on the sea.

The location control means may include: a plurality of support frames which include a pair of basic bar members disposed to face each other at one side and the other side thereof and a support bar connecting the pair of basic bars and which are spaced apart from each other in a circumferential direction of the main buoyant body; a motion plate which has an airfoil cross-sectional structure and of which both sides are rotatably connected to the basic bar members by being disposed between the basic bar members; a plate-shaped linkage plate having elasticity, which is connected to one end of the motion plate by being disposed between the basic bar members and has both sides on which a connection bar is formed; a rotation power generator which is connected to the connection bar at one side of the linkage plate by being installed at the basic bar members at one side thereof and produces power by rotation of the linkage plate that makes a vertical motion due to the waves on the sea; a rotation driving unit which is connected to the connection bar at the other side of the linkage plate installed at the basic bar members at the other side thereof, is electrically connected to the rotation power generator and generates a driving force by power supplied from the rotation power generator so that the linkage plate is rotated; and a driving controller which is electrically connected to the rotation power generator and the rotation driving unit and controls whether power produced by the rotation power generator is supplied to the rotation driving unit.

The rotation power generator may include: a power generation gear box including a first crank shaft having one end coupled to a first rotation shaft and the other end on which a first fly wheel is disposed and a first link member having one end coupled to the first fly wheel and the other end connected to a connection bar at one side of the linkage plate; and a power generator which is connected to the first rotation shaft of the power generation gear box and produces power by a rotational force of the first rotation shaft.

The rotation driving unit may include: a driving gear box including a second crank shaft having one end coupled to a second rotation shaft and the other end on which a second fly wheel is disposed and a second link member having one end coupled to the second fly wheel and the other end connected to a connection bar at the other side of the linkage plate; a deceleration gear box connected to the second rotation shaft of the driving gear box; and a driving motor connected to the deceleration gear box.

The oscillation inhibiting means include: a plurality of first absorption plates which are spaced apart from each other in the circumferential direction of the main buoyant body and each have one end rotatably coupled to the main buoyant body in a vertical direction by means of a hinge; and a second absorption plate rotatably hinge-coupled to the other end of each of the plurality of first absorption plates in the vertical direction.

The oscillation inhibiting means further include a connection wire having a structure of a ring that connects the second absorption plates.

The dock connection unit may include: a bar-shaped connection arm connected to an outside surface of the main buoyant body to protrude in a direction of an outside of the main buoyant body; and a transportation rail which is installed at a top surface of the connection arm in a longitudinal direction and enables articles to be unloaded from the ship to be transported.

Each of the wind power generators may produce a total amount of power of 100 to 120 MW.

### EFFECT OF THE INVENTION

As described above, in a floating wind power generation device according to the present invention, sea waves generated on the sea in a state in which a plurality of wind power generators are installed on top of an auxiliary buoyant body placed in a space portion of a main buoyant body, are absorbed by means of vertical reciprocating motion energy, generated by an oscillation inhibiting means as well as a location control means, so that the main buoyant is prevented from shaking due to the effect of the sea waves and maintains an equilibrium state, thereby enabling stable wind power generation.

### DESCRIPTION OF THE DRAWINGS

FIG. 1 is a perspective view of a floating wind power generation device according to an embodiment of the present invention.
FIG. 2 is a perspective view of a location control means illustrated in FIG. 1.
FIG. 3 is an enlarged perspective view of a motion plate illustrated in FIG. 2.
FIG. 4 is a schematic perspective view of a rotation generator illustrated in FIG. 2.
FIG. 5 is a schematic perspective view of a rotation driving unit illustrated in FIG. 2.
FIG. 6 is a schematic configuration view of a gear box illustrated in FIGS. 4 and 5.
FIG. 7 is a perspective view of an oscillation inhibiting means illustrated in FIG. 1.

### BEST MODE

Hereinafter, exemplary embodiments of the present invention will be described in detail with reference to the accompanying drawings.

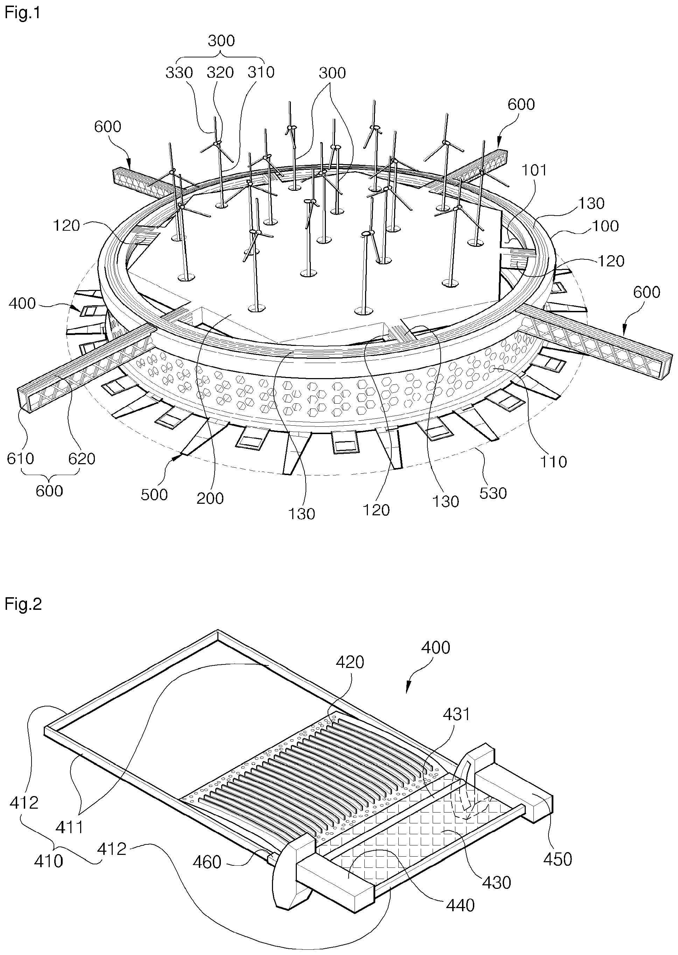

FIG. 1 is a perspective view of a floating wind power generation device according to an embodiment of the present invention, and FIG. 2 is a perspective view of a location control means illustrated in FIG. 1. Referring to FIGS. 1 and 2, the floating wind power generation device includes a main buoyant body 100, an auxiliary buoyant body 200, a wind power generator 300, a location control means 400, an oscillation inhibiting means 500, and a dock connection unit 600.

The main buoyant body 100 is a structure to be supported in a state in which the auxiliary buoyant body 200, the wind power generator 300, the local control means 400, the oscillation inhibiting means 500 and the dock connection unit 600, which will be described below, are installed. The main buoyant body 100 that is the structure having buoyancy to float on the sea is illustrated as a circular ring structure having a space portion 101 formed in the center thereof so that the auxiliary buoyant body 200 that will be described later can be inserted into the space portion 101. However, embodiments of the present invention are not limited thereto, and a structure may be formed to have a rectangular ring or various other ring shapes, or a structure having the space portion 101 formed on a block structure having various shapes as well as a circular block structure may also be used.

A plurality of through holes 110 are formed through the periphery of outside walls of the main buoyant body 100 so that a contact area between the main buoyant body 100 and a water plane is reduced and thus a wave-making resistance applied to the main buoyant body 100 is minimized and motion performance of the main buoyant body 100 is improved.

In addition, a support 120 is coupled to the main buoyant body 100 so that the auxiliary buoyant body 200 can be connected to and supported by the support 120 in a state in which the auxiliary buoyant body 200 that will be described below is inserted into the space portion 101. The support 120 that is a bar-shaped member has one end connected to the main buoyant body 100 and the other end connected to the auxiliary buoyant body 200.

A transportation rail 130 may be formed on each of a top surface of the main buoyant body 100 and on a top surface of the support 120 so as to transport an article unloaded from a ship and transported by the dock connection unit 600 that will be described below, to a desired place.

The auxiliary buoyant body 200 is a plate-shaped structure that increases buoyancy of the main buoyant body 100 and further connects and supports the wind power generator 300 that will be described later. The auxiliary buoyant body 200 is coupled to the main buoyant body 101 by means of the support 120 in a state in which the auxiliary buoyant body 200 is inserted into the space portion 101 of the main buoyant body 100, as described above.

A plurality of wind power generators 300 are power generation facilities that are installed on the auxiliary buoyant body 200 to be spaced apart from each other and produce power using wind power generated on the sea. The wind power generators 300 are connected to the auxiliary buoyant body 200 to protrude upwardly in a state in which the wind power generators 300 are vertically disposed on top of the auxiliary buoyant body 200. Here, each of the wind power generators 300 includes a tower 310 having a bottom end coupled to a top surface of the auxiliary buoyant body 200 while being vertically disposed on top of the auxiliary buoyant body 200, a nacelle 320 that is connected to an upper portion of the tower 310 and generates electricity from a rotational force of a blade 330, and the blade 330 that is rotatably installed at the nacelle 320 and rotates by wind power. In this case, a total amount of power produced by the plurality of wind power generators 300 may be 100 to 120 MW.

The location control means 400 is connected to the main buoyant body 100 to control a location of the main buoyant body 100 on the sea. A plurality of location control means 400 are installed to be spaced apart from each other in a circumferential direction of an outside of the main buoyant body 100. Here, each of the plurality of location control means 400 includes a support frame 410, a motion plate 420, a linkage plate 430, a rotation power generation unit 440, a rotation driving unit 450, and a driving controller 460.

The support frame 410 is a frame member that supports the motion plate 420, the rotation power generation unit 440, and the rotation driving unit 450, which will be described below. Here, the support frame 410 has a structure of a rectangular frame including a pair of support bars 412 that, in a state in which a pair of basic bar members 411 are disposed at one side and the other side of the support frame 410 to face each other, enables both ends of each of the basic bar members 411 in a longitudinal direction to be connected to each other. A plurality of support frames 410 are disposed to be spaced apart from each other in the circumferential direction of the outside of the main buoyant body 100 and are connected to outsides of the plurality of support frames 410.

Here, the motion plate 420 is disposed at an inside of each of the support frames 410, in more detail, between the basic bar members 411, and both sides of the motion plate 420 are rotatably connected to the basic bar members 411. The rotation power generation unit 440 is coupled to the basic bar members 411 placed at both sides of each of the support frames 410, in more detail, at one side of each of the support frames 410, and the rotation driving unit 450 is coupled to the basic bar member 411 placed at the other side of each of the support frames 410.

The motion plate 420 is disposed at an inside of each of the support frames 410, i.e., between the basic bar members 411, and both sides of the motion plate 420 are rotatably hinge-connected to the basic bar members 411. The motion plate 420 has an airfoil cross-sectional structure so that a flow of a fluid on the sea can be smoothly performed. Here, the motion plate 420 generates motion energy in an opposite direction to a direction in which sea-wave motion energy is generated. That is, because the motion plate 420 makes a rotational motion due to the effect of the sea waves to generate motion energy, the location of the main buoyant 100 is not changed due to the effect of the sea waves.

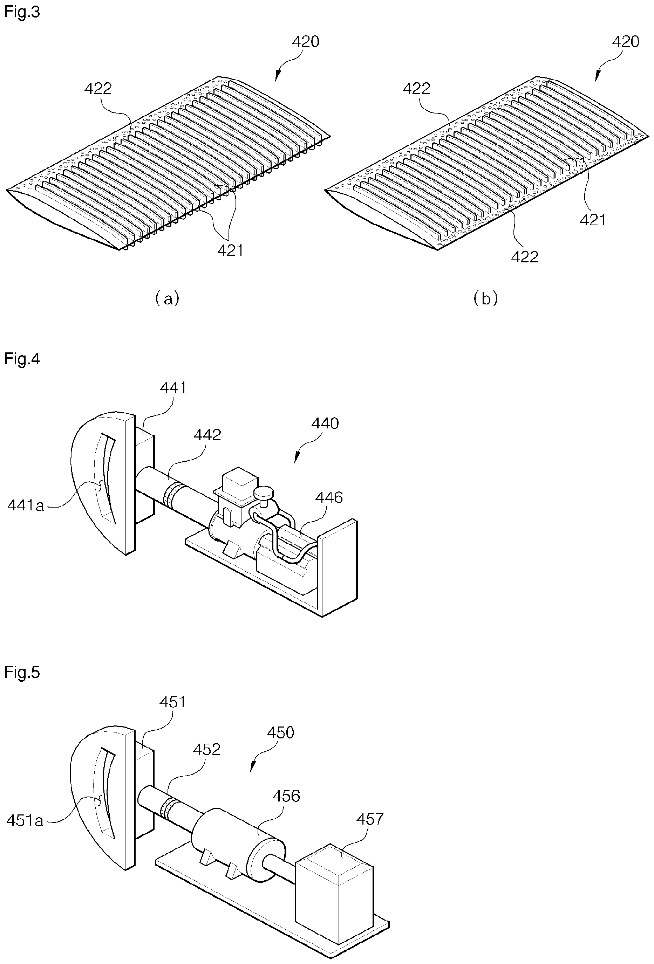

Referring to FIG. 3, a plurality of protrusions 421 may be formed in a longitudinal direction of a top surface of the motion plate 420 and in a longitudinal direction of a bottom surface of the motion plate 420. Here, the plurality of protrusions 421 generate turbulence on surfaces of the top and bottom surfaces of the motion plate 420 to increase propulsion and buoyancy. That is, the protrusions 421 are affected by the waves and increase motion energy generated when the motion plate 420 makes a rotational motion.

Furthermore, a plurality of dimples 422 or protrusions (not shown in the drawing) may also be formed at edges of the top and bottom surfaces of the motion plate 420, i.e., adjacent to the above-described protrusions 421 in a longitudinal direction of the motion plate 420. Here, it is obvious that the dimples 422 or protrusions may also be formed on the entire surface of the top and bottom surfaces of the motion plate 420 instead of the plurality of protrusions 421 formed on the top and bottom surfaces of the motion plate 420.

The linkage plate 430 is a plate-shaped member that is connected to one end of the motion plate 420, i.e., an opposite end of the motion plate 420 to an end toward an outside of the main buoyant body 100 and is linked when the motion plate 420 makes a rotational motion on the support frames 410. In this case, the linkage plate 430 is a plate having elasticity to increase motion energy in a vertical direction when the linkage plate 430 makes a motion by motion energy generated from the motion plate 420 so as to correspond to the motion plate 420.

One end of the linkage plate 430 is connected to one end of the motion plate 420 by being disposed at an inside of the support frames, in more detail, between the basic bar members 411. In this case, connection bars 431 protrude from both sides of the linkage plate 430, i.e., side surfaces facing the basic bar members 411 and are connected to the rotation power generation unit 440 and the rotation driving unit 450, respectively, which will be described below. That is, the rotation power generation unit 440 is connected to the connection bar 431 formed at one side of the linkage plate 430, and the rotation driving unit 450 is connected to the connection bar 431 formed at the other side of the linkage plate 430.

The rotation power generation unit 440 changes motion energy delivered from the linkage plate 430 into electrical energy to produce power when the linkage plate 430 makes a reciprocating motion in the vertical direction as a rotational motion of the motion plate 420 occurs due to the waves on the sea. The rotation power generation unit 440 is connected to the connection bar 431 at one side thereof by being coupled to the basic bar member 411 at one side thereof. Referring to FIG. 4, the rotation power generation unit 440 includes a power generation gear box 441 and a power generator 446.

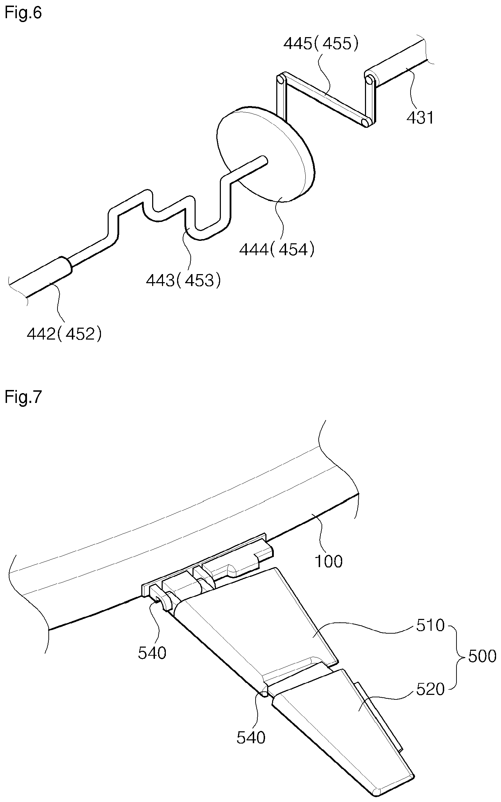

The power generation gear box 441 changes a vertical reciprocating motion of the motion plate 420 and the linkage plate 430 into a rotational motion. Referring to FIG. 6, the power generation gear box 441 includes a first crank shaft 443 having one end coupled to a first rotation shaft 442 and the other end on which a first fly wheel 444 is placed, and a first link member 445 having one end coupled to the first fly wheel 444 and the other end connected to the connection bar 431 at one side of the linkage plate 430. In this case, a guide groove 441a is formed through one side of the power generation gear box 441 to guide the connection bar 431 at one side of the linkage plate 430 to be moved in the vertical direction.

The power generator 446 is connected to the first rotation shaft 442 of the power generation gear box 441. The power generator 446 produces power by a rotational force of the first rotation shaft 442.

When, in this way, the linkage plate 430 makes a vertical motion while being linked to a motion of the motion plate 420 that is vertically moved by the sea waves, the connection bar 431 at one side of the linkage plate 430 is vertically moved along the guide groove 441a of the power generation gear box 441, and when the connection bar 431 is vertically moved, the first link member 445 connected to the connection bar 431 rotates the first fly wheel 444 so that the first rotation shaft 442 rotates and the power generator 446 is driven by the rotational force of the first rotation shaft 442 to produce power.

Here, it is obvious that the rotation power generation unit 440 may include a battery facility (not shown in the drawing) capable of storing power produced by the power generator 446.

The rotation driving unit 450 is driven by power produced by the rotation power generation unit 440 and allows the linkage plate 430 to make a reciprocating motion in the vertical direction. The rotation driving unit 450 is connected to the connection bar 431 at the other side of the linkage plate 430 while being coupled to the basic bar member 411 at the other side thereof. Furthermore, the rotation driving unit 450 is electrically connected to the rotation power generation unit 440. Referring to FIG. 5, the rotation driving unit 450 includes a driving gear box 451, a deceleration gear box 456, and a driving motor 457.

The driving gear box 451 changes a rotational motion of a driving motor that will be described below, into a vertical reciprocating motion so that the motion plate 420 and the linkage plate 430 make a reciprocating motion in the vertical direction. Referring to FIG. 6, the driving gear box 451 includes a second crank shaft 453 having one end coupled to a second rotation shaft 452 and the other end on which a second fly wheel 454 is placed, and a second link member 455 having one end coupled to the second fly wheel 454 and the other end connected to the connection bar 431 at the other side of the linkage plate 430. In this case, a guide groove 451a is formed through the other side of the driving gear box 451 to guide the connection bar 431 at the other side of the linkage plate 430 to be moved in the vertical direction. Here, it is obvious that a clutch means that allows transmission of power to be selectively cut off may be provided on the second rotation shaft 452.

The deceleration gear box 456 reduces a rotation speed generated in the driving motor 457 to deliver the rotation speed to the driving gear box 451. That is, the deceleration gear box 456 is installed to be connected to the second rotation shaft 452 of the driving gear box 456 and a driving shaft of the driving motor 457, respectively, by having a deceleration gear (not shown in the drawing) provided inside thereof.

The driving motor 457 generates a driving force so that the connection bar 431 at the other side of the linkage plate 430 can be moved in the vertical direction. The driving motor 457 is installed in such a way that the driving shaft thereof is connected to a shaft portion of the deceleration gear box 465 in a state in which the driving motor 457 is coupled to the basic bar member 411 disposed at the other side of the support frame 410.

The driving controller 460 controls an operation of the rotation driving unit 450. That is, the driving controller 460 is electrically connected to the power generator 446 of the rotation power generation unit 440 and the driving motor 457 of the rotation driving unit 450 to control whether power produced by the rotation power generation unit 440 is supplied to the rotation driving unit 450. In this case, the driving controller 460 forces the motion plate 420 to be arbitrarily driven when an environment or condition of the sea is deteriorated and wind or waves are severe and the location of the main buoyant body 100 is not controlled only by motion energy generated in the motion plate 420. Here, it is obvious that the driving controller 460 may include a detector (not shown in the drawing) capable of measuring the intensity of wind or waves on the sea.

Furthermore, it is obvious that a global positioning system (GPS)(not shown in the drawing) is additionally provided at the location control means 400 to receive a current location of the main buoyant body 100 and then to drive the driving motor 457 of the rotation driving unit 450 based on received location data so that the location of the main buoyant body 100 can be controlled.

The oscillation inhibiting means 500 absorbs wave motion energy of the sea delivered to the main buoyant body 100 so that the main buoyant body 100 can maintain a stable equilibrium state on the sea. That is, the oscillation inhibiting means 500 makes a reciprocating motion in the vertical direction due to the waves of the sea to generate motion energy and to absorb the sea waves. A plurality of oscillation inhibiting means 500 are installed to be spaced apart from each other in the circumferential direction of the outside of the main buoyant body 100. Referring to FIG. 7, the oscillation inhibiting means 500 includes a first absorption plate 510 and a second absorption plate 520.

The first absorption plate 510 is a plate-shaped member in which a plurality of first absorption plates 510 are spaced apart from each other in the circumferential direction of the outside of the main buoyant body 100 and each have one end connected to the outside of the main buoyant body 100. One end of each of the first absorption plates 510 is rotatably connected to the outside of the main buoyant body 100 in the vertical direction by means of a hinge 540.

The second absorption plate 520 is a plate-shaped member contacted to the first absorption plate 510. One end of the second absorption plate 520 is rotatably connected to the other end of each of the first absorption plate 510 in the vertical direction by means of the hinge 540.

Because, in this way, the first absorption plate 510 and the second absorption plate 520 are rotatably connected to each other in the vertical direction and the first absorption plate 510 is rotatably connected to the main buoyant 100 in the vertical direction, the first absorption plate 510 and the second absorption plate 520 make a rotational motion in the vertical direction due to the effect of the sea waves to generate and absorb motion energy, and the main buoyant 100 is prevented from shaking due to the effect of the sea waves and maintains an equilibrium state.

A connection wire 530 having a structure of a ring that connects the second absorption plates 520 spaced apart from each other in a circumferential direction of the main buoyant 100, is installed at the oscillation inhibiting means 500. The connection wire 530 delivers the rotational motion, generated in the first absorption plate 510 and the second absorption plate 520 due to the effect of the sea waves in the vertical direction, to the first absorption plate 510 and the second absorption plate 520 so that the effect of the sea waves can be inhibited from being delivered to the main buoyant body 100.

The dock connection unit 600 is a structure that enables an operating ship to lie at anchor on the main buoyant body 100 on the sea. The dock connection unit 600 is disposed so that one end thereof is connected to the main buoyant body 100 and the other end thereof protrudes from an outside of the main buoyant body 100 to enable the ship to lie at anchor stably. Here, the dock connection unit 600 includes a connection arm 610 and a transportation rail 620.

The connection arm 610 is a bar-shaped member connected to the main buoyant body 100 to protrude from the outside of the main buoyant body 100. That is, one end of the connection arm 610 is connected to an outside surface of the main buoyant body 100, and the other end of the connection arm 610 extends to protrude from the outside of the main buoyant body 100. In this case, a height of a top surface of the connection arm 610 is formed to correspond to a height of the top surface of the main buoyant body 100 so that an article to be unloaded from the ship onto the connection arm 610 can be stably transported.

The transportation rail 620 is installed at the top surface of the connection arm 610 to extend in a longitudinal direction and enables the article to be unloaded from the ship to an upper portion of the connection arm 610 to be easily transported in a direction of the main buoyant body 100. In this case, the transportation rail 610 installed at the connection arm 610 is connected to the transportation rail 130 formed on the main buoyant body 100 so that the article can be easily transported to a desired position via the transportation rail 610.

An operation of the floating wind power generation device having the above configuration according to an embodiment of the present invention will be described as below.

First, when the main buoyant body 100 is disposed to float on the sea, the blade 330 of the wind power generator 300 is rotated due to wind generated on the sea so that power can be produced by the nacelle 320.

In this case, the waves generated on the sea are maintained in a stable equilibrium state when the motion energy is absorbed by the location control means 400 and the oscillation inhibiting means 500. That is, due to the waves of the sea, the motion plate 420 and the linkage plate 430 of the location control means 400 make a rotational motion in the vertical direction, generate motion energy and absorb the waves, and the first absorption plate 510 and the second absorption plate 520 of the oscillation inhibiting means 500 also make a rotational motion in the vertical direction, generate motion energy and absorb the waves.

If the waves generated on the sea are out of a predetermined range and severe, the rotation driving unit 450 of the location control means 400 forces the motion plate 420 to be driven and controls a location thereof.

That is, when the driving motor 457 of the rotation driving unit 450 is driven by power generated by the power generator 446 of the rotation power generator 440, the second rotation shaft 452 of the driving gear box 451 rotates, and when the second rotation shaft 452 rotates, the second crank shaft 453 is rotated so that the second link member 455 operates.

When, in this way, the second link member 455 operates, the connection bar 431 at the other side of the linkage plate 430 is linked to the second link member 455 and makes a reciprocating motion in the vertical direction along the guide groove 451a of the driving gear box 451. When the connection bar 431 at the other side of the linkage plate 430 makes a reciprocation motion in the vertical direction, the motion plate 431 also makes a reciprocating motion in the vertical direction so that a floating position of the main buoyant body 100 can be adjusted.

In this way, in the floating wind power generation device according to an embodiment, in a state in which the plurality of wind power generators 300 are installed on top of the auxiliary buoyant body 300 disposed in the space portion 101 of the main buoyant body 100, the waves generated on the sea are absorbed by vertical reciprocating motion energy generated by the oscillation inhibiting means 500 as well as the location control means 400 so that the main buoyant body 100 is prevented from shaking due to the effect of the waves and maintains an equilibrium state, thereby enabling stable wind power generation.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A floating wind power generation device comprising:
a main buoyant body (100) which has buoyancy, so as to float on the sea, and has a space portion (101) provided in the center;
an auxiliary buoyant body (200) which has buoyancy and is connected to the main buoyant body (100) by being inserted into the space portion (101) of the main buoyant body (100);
a plurality of wind power generators (300) which generate power;
a location control means (400) which is connected to the main buoyant body (100) and controls the location of the main buoyant body (100); and
a dock connection unit (600) which is connected to the main buoyant body (100) and enables a ship to lie at anchor on the sea;
**characterized in that** the wind power generators (300) are vertically provided on top of the auxiliary buoyant body (200),
and **in that** the floating wind power generation device comprises an oscillation inhibiting means (500) which is connected to the main buoyant body (100) and enables the main buoyant body (100) to maintain an equilibrium state by absorbing the sea waves, wherein the oscillation inhibiting means (500) comprises a plurality of first absorption plates (510) which are spaced apart from each other in the circumferential direction of the main buoyant body (100) and each have one end rotatably coupled to the main buoyant body (100) in a vertical direction by means of a hinge (540), a second absorption plate (520) rotatably hinge-coupled to the other end of each of the plurality of first absorption plates (510) in the vertical direction, and a connection wire (530) having a structure of a ring that connects the second absorption plates (520).

2. The floating wind power generation device of claim 1, wherein the location control means (400) comprises:
a plurality of support frames (410) which comprise a pair of basic bar members (411) disposed to face each other at one side and the other side thereof and a support bar (412) connecting the pair of basic bars and which are spaced apart from each other in a circumferential direction of the main buoyant body (100);
a motion plate (420) which has an airfoil cross-sectional structure and of which both sides are rotatably connected to the basic bar members (411) by being disposed between the basic bar members (411);
a plate-shaped linkage plate (430) having elasticity, which is connected to one end of the motion plate (420) by being disposed between the basic bar members (411) and has both sides on which a connection bar (431) is formed;
a rotation power generator (440) which is connected to the connection bar (431) at one side of the linkage plate (430) by being installed at the basic bar members (411) at one side thereof and produces power by rotation of the linkage plate (430) that makes a vertical motion due to the waves on the sea;
a rotation driving unit (450) which is connected to the connection bar (431) at the other side of the linkage plate (430) installed at the basic bar members (411) at the other side thereof, is electrically connected to the rotation power generator (440) and generates a driving force by power supplied from the rotation power generator (440) so that the linkage plate (430) is rotated; and
a driving controller (460) which is electrically connected to the rotation power generator (440) and the rotation driving unit (450) and controls whether power produced by the rotation power generator (440) is supplied to the rotation driving unit (450).

3. The floating wind power generation device of claim 2, wherein the rotation power generator (440) comprises:
a power generation gear box (441) comprising a first crank shaft (443) having one end coupled to a first rotation shaft (442) and the other end on which a first fly wheel (444) is disposed and a first link member (445) having one end coupled to the first fly wheel (444) and the other end connected to a connection bar (431) at one side of the linkage plate (430); and
a power generator (446) which is connected to the first rotation shaft (442) of the power generation gear box (441) and produces power by a rotational force of the first rotation shaft (442).

4. The floating wind power generation device of claim 2, wherein the rotation driving unit (450) comprises:
a driving gear box (451) comprising a second crank shaft (453) having one end coupled to a second rotation shaft (452) and the other end on which a second fly wheel (454) is disposed and a second link member (455) having one end coupled to the second fly wheel (454) and the other end connected to a connection bar (431) at the other side of the linkage plate (430);
a deceleration gear box (456) connected to the second rotation shaft (452) of the driving gear box (451); and
a driving motor (457) connected to the deceleration gear box (456).

5. The floating wind power generation device of claim 1, wherein the dock connection unit (600) comprises:
a bar-shaped connection arm (610) connected to an outside surface of the main buoyant body (100) to protrude in a direction of an outside of the main buoyant body (100); and
a transportation rail (620) which is installed at a top surface of the connection arm (610) in a longitudinal direction and enables articles to be unloaded from the ship to be transported.

6. The floating wind power generation device of claim 1, wherein each of the wind power generators (300) produces a total amount of power of 100 to 120 MW.

## Patentansprüche

1. Schwimmende Windenergieerzeugungsvorrichtung, umfassend:
einen Hauptschwimmkörper (100), der Auftrieb hat, um auf dem Meer zu schwimmen, und der einen in der Mitte vorgesehenen Raumabschnitt (101) aufweist;
einen Hilfsschwimmkörper (200), der Auftrieb hat und der durch dessen Einsetzen in den Raumabschnitt (101) des Hauptschwimmkörpers (100) mit dem Hauptschwimmkörper (100) verbunden ist;
eine Mehrzahl von Windkraftgeneratoren (300), die Energie erzeugen;
eine Ortssteuereinrichtung (400), die mit dem Hauptschwimmkörper (100) verbunden ist und den Ort des Hauptschwimmkörpers (100) steuert; und
eine Dockverbindungseinheit (600), die mit dem Hauptschwimmkörper (100) verbunden ist und es einem Schiff ermöglicht, auf dem Meer vor Anker zu liegen;
**dadurch gekennzeichnet, dass** die Windkraftgeneratoren (300) vertikal auf dem Hilfsschwimmkörper (200) angeordnet sind,
und dass die schwimmende Windenergieerzeugungsvorrichtung eine Schwingungshemmungseinrichtung (500) umfasst, die mit dem Hauptschwimmkörper (100) verbunden ist und es dem Hauptschwimmkörper (100) ermöglicht, durch Absorption der Meereswellen einen Gleichgewichtszustand aufrechtzuerhalten, wobei die Schwingungshemmungseinrichtung (500) mehrere erste Absorptionsplatten (510) aufweist, die in Umfangsrichtung des Hauptschwimmkörpers (100) voneinander beabstandet sind und jeweils ein Ende mittels eines Scharniers (540) drehbar in vertikaler Richtung mit dem Hauptschwimmkörper (100) gekoppelt aufweisen, wobei eine zweite Absorptionsplatte (520) drehbar mit dem anderen Ende jeder der mehreren ersten Absorptionsplatten (510) in der vertikalen Richtung scharniergekoppelt ist, und ein Verbindungsseil (530) mit der Struktur eines Rings aufweist, der die zweiten Absorptionsplatten (520) verbindet.

2. Schwimmende Windenergieerzeugungsvorrichtung nach Anspruch 1, wobei die Ortssteuereinrichtung (400) umfasst:
eine Mehrzahl von Tragrahmen (410), die ein Paar von Grundstangenelementen (411) aufweisen, die so angeordnet sind, dass sie sich auf einer Seite und der anderen Seite gegenüberliegen, und eine Tragstange (412) aufweisen, die das Paar von Grundstangen verbindet, und die in einer Umfangsrichtung des Hauptschwimmkörpers (100) voneinander beabstandet sind;
eine Bewegungsplatte (420) mit einer Tragflächenquerschnittsstruktur, deren beide Seiten durch Anordnung zwischen den Grundstangenelementen (411) drehbar mit den Grundstangenelementen (411) verbunden sind;
eine plattenförmige Verbindungsplatte (430) mit Elastizität, die durch deren Anordnung zwischen den Grundstangenelementen (411) mit einem Ende der Bewegungsplatte (420) verbunden ist und auf beiden Seiten eine Verbindungsstange (431) aufweist;
einen Drehenergiegenerator (440), der mit der Verbindungsstange (431) an einer Seite der Verbindungsplatte (430) durch dessen Installation an den Grundstangenelementen (411) an einer Seite davon verbunden ist und Energie durch Drehung der Verbindungsplatte (430) erzeugt, die aufgrund der Wellen auf dem Meer eine vertikale Bewegung ausführt;
eine Drehantriebseinheit (450), die mit der Verbindungsstange (431) auf der anderen Seite der Verbindungsplatte (430) verbunden ist, die an den Grundstangenelementen (411) auf der anderen Seite davon installiert ist, und die elektrisch mit dem Drehenergiegenerator (440) verbunden ist und eine Antriebskraft durch Energie erzeugt, die von dem Drehenergiegenerator (440) geliefert wird, so dass die Verbindungsplatte (430) gedreht wird; und
eine Antriebssteuereinrichtung (460), die elektrisch mit dem Drehenergiegenerator (440) und der Drehantriebseinheit (450) verbunden ist und steuert, ob von dem Drehenergiegenerator (440) erzeugte Energie der Drehantriebseinheit (450) zugeführt wird.

3. Schwimmende Windenergieerzeugungsvorrichtung nach Anspruch 2, wobei der Drehenergiegenerator (440) umfasst:
ein Energieerzeugungsgetriebe (441), das eine erste Kurbelwelle (443) aufweist, von der ein Ende mit einer ersten Drehwelle (442) gekoppelt ist und an deren anderen Ende ein erstes Schwungrad (444) angeordnet ist, und ein erstes Verbindungselement (445) aufweist, von dem ein Ende mit dem ersten Schwungrad (444) verbunden ist und das andere Ende mit einer Verbindungsstange (431) an einer Seite der Verbindungsplatte (430) verbunden ist; und
einen Energiegenerator (446), der mit der ersten Drehwelle (442) des Energieerzeugungsgetriebes (441) verbunden ist und Energie durch eine Drehkraft der ersten Drehwelle (442) erzeugt.

4. Schwimmende Windenergieerzeugungsvorrichtung nach Anspruch 2, wobei die Drehantriebseinheit (450) umfasst:
ein Antriebsgetriebe (451), das eine zweiten Kurbelwelle (453) aufweist, von der ein Ende mit einer zweiten Drehwelle (452) gekoppelt ist und an deren anderen Ende ein zweites Schwungrad (454) angeordnet ist, und ein zweites Verbindungselement (455) aufweist, von dem ein Ende mit dem zweiten Schwungrad (454) verbunden ist und das andere Ende mit einer Verbindungsstange (431) an der anderen Seite der Verbindungsplatte (430) verbunden ist;
ein Verlangsamungsgetriebe (456), das mit der zweiten Drehwelle (452) des Antriebsgetriebes (451) verbunden ist; und
einen Antriebsmotor (457), der mit dem Verlangsamungsgetriebe (456) verbunden ist.

5. Schwimmende Windenergieerzeugungsvorrichtung nach Anspruch 1, wobei die Dockverbindungseinheit (600) umfasst:
einen stangenförmigen Verbindungsarm (610), der mit einer Außenfläche des Hauptschwimmkörpers (100) verbunden ist, um in Richtung einer Außenseite des Hauptschwimmkörpers (100) abzustehen; und
ein Transportgleis (620), das an einer Oberseite des Verbindungsarms (610) in einer Längsrichtung installiert ist und ein Entladen von zu transportierenden Gegenständen vom Schiff ermöglicht.

6. Schwimmende Windenergieerzeugungsvorrichtung nach Anspruch 1, wobei jeder der Windkraftgeneratoren (300) eine Gesamtleistung von 100 bis 120 MW erzeugt.

## Revendications

1. Dispositif de génération d'énergie éolienne flottant, comprenant :
un corps flottant principal (100) présentant une flottabilité, de manière à flotter sur la mer, et présentant une partie d'espace (101) pourvue d'un centre ;
un corps flottant auxiliaire (200) présentant une flottabilité, relié au corps flottant principal (100) en étant inséré dans la partie d'espace (101) du corps flottant principal (100) ;
une pluralité de générateurs d'énergie éolienne (300) générant de l'énergie ;
un moyen de commande d'emplacement (400) connecté au corps flottant principal (100) et commandant l'emplacement du corps flottant principal (100) ; et
une unité de connexion au port (600) connectée au corps flottant principal (100) et permettant à un navire de rester au mouillage en mer ;
**caractérisé en ce que** les générateurs d'énergie éolienne (300) sont disposés verticalement sur le dessus du corps flottant auxiliaire (200),
et **en ce que** le dispositif de génération d'énergie éolienne flottant comprend un moyen d'inhibition des oscillations (500) relié au corps flottant principal (100) et permettant au corps flottant principal (100) de maintenir un état d'équilibre en absorbant les vagues de la mer, dans lequel le moyen d'inhibition des oscillations (500) comprend une pluralité de premières plaques d'absorption (510) espacées les unes des autres dans la direction circonférentielle du corps flottant principal (100) et présentant respectivement une extrémité accouplée de façon rotative au corps flottant principal (100) dans une direction verticale à l'aide d'une charnière (540), une deuxième plaque d'absorption (520) accouplée par charnière de façon rotative à l'autre extrémité de chacune parmi la pluralité de premières plaques d'absorption (510) dans la direction verticale, et un câble de connexion (530) présentant une structure en anneau reliant les deuxièmes plaques d'absorption (520).

2. Dispositif de génération d'énergie éolienne flottant selon la revendication 1, dans lequel le moyen de commande d'emplacement (400) comprend :
une pluralité de cadres de support (410) comprenant une paire d'éléments de barre basiques (411) disposés l'un en face de l'autre sur un côté et l'autre côté de ceux-ci et une barre de support (412) reliant la paire de barres basiques, et lesquels sont espacés les uns des autres dans une direction circonférentielle du corps flottant principal (100) ;
une plaque de mouvement (420) présentant une structure de section transversale aérodynamique et dont les deux côtés sont reliés de façon rotative aux éléments de barre basiques (411) en étant disposés entre les éléments de barre basiques (411) ;
une plaque de liaison en forme de plaque (430) présentant une élasticité, laquelle est reliée à une extrémité de la plaque de mouvement (420) en étant disposée entre les éléments de barre basiques (411) et présente deux côtés sur lesquels est formée une barre de connexion (431) ;
un générateur d'énergie par rotation (440) relié à la barre de connexion (431) d'un côté de la plaque de liaison (430) en étant installé au niveau des éléments de barre basiques (411) sur un côté de ceux-ci et produisant de l'énergie en faisant tourner la plaque de liaison (430), créant ainsi un mouvement vertical en raison des vagues sur la mer ;
une unité d'entraînement en rotation (450) reliée à la barre de connexion (431) de l'autre côté de la plaque de liaison (430), installée au niveau des éléments de barre basiques (411) sur l'autre côté de ceux-ci, laquelle est électriquement reliée au générateur d'énergie par rotation (440) et génère une force d'entraînement grâce à de l'énergie fournie à partir du générateur d'énergie par rotation (440) de manière à faire tourner la plaque de liaison (430) ; et
un élément de commande d'entraînement (460) électriquement relié au générateur d'énergie par rotation (440) et à l'unité d'entraînement en rotation (450) et commandant l'apport de l'énergie produite par le générateur d'énergie par rotation (440) à l'unité d'entraînement en rotation (450).

3. Dispositif de génération d'énergie éolienne flottant selon la revendication 2, dans lequel le générateur d'énergie par rotation (440) comprend :
une boîte de transmission de génération d'énergie (441) comprenant un premier arbre coudé (443) présentant une extrémité accouplée à un premier arbre de rotation (442) et une autre extrémité sur laquelle est disposée une première roue libre (444), et un premier élément de liaison (445) présentant une extrémité accouplée à la première roue libre (444) et une autre extrémité reliée à une barre de connexion (431) sur un côté de la plaque de liaison (430) ; et
un générateur d'énergie (446) relié au premier arbre de rotation (442) de la boîte de transmission de génération d'énergie (441) et produisant de l'énergie à l'aide d'une force rotative du premier arbre de rotation (442).

4. Dispositif de génération d'énergie éolienne flottant selon la revendication 2, dans lequel l'unité d'entraînement en rotation (450) comprend :
une boîte de transmission d'entraînement (451) comprenant un deuxième arbre coudé (453) présentant une extrémité accouplée à un deuxième arbre de rotation (452) et une autre extrémité sur laquelle est disposée une deuxième roue libre (454), et un deuxième élément de liaison (455) présentant une extrémité accouplée à la deuxième roue libre (454) et une autre extrémité reliée à une barre de connexion (431) sur l'autre côté de la plaque de liaison (430) ;
une boîte de transmission de décélération (456) reliée au deuxième arbre de rotation (452) de la boîte de transmission d'entraînement (451) ; et
un moteur d'entraînement (457) relié à la boîte de transmission de décélération (456).

5. Dispositif de génération d'énergie éolienne flottant selon la revendication 1, dans lequel l'unité de connexion au port (600) comprend :
un bras de connexion en forme de barre (610) reliée à une surface extérieure du corps flottant principal (100) pour faire saillie dans une direction d'un extérieur du corps flottant principal (100) ; et
un rail transparent (620) installé sur une surface supérieure du bras de connexion (610) dans une direction longitudinale et permettant de décharger des articles du navire pour le transport.

6. Dispositif de génération d'énergie éolienne flottant selon la revendication 1, dans lequel chacun des générateurs d'énergie éolienne (300) produit une quantité totale d'énergie de 100 à 120 MW.
